Europäisches Patentamt

European Patent Office

Office européen des brevets

(19)

(11) Numéro de publication: **0 469 640 A2**

# (12) DEMANDE DE BREVET EUROPEEN

(21) Numéro de dépôt: **91117782.2**

(22) Date de dépôt: **19.12.89**

(51) Int. Cl.⁵: **C03B 23/03**

Cette demande a été déposée le 18 - 10 - 1991 comme demande divisionnaire de la demande mentionnée sous le code INID 60.

(30) Priorité: **21.12.88 FR 8816894**
**09.03.89 FR 8903076**
**09.03.89 FR 8903078**

(43) Date de publication de la demande:
**05.02.92 Bulletin 92/06**

(60) Numéro de publication de la demande initiale en application de l'article 76 CBE : **0 375 535**

(84) Etats contractants désignés:
**BE CH DE ES FR GB IT LI LU NL SE**

(71) Demandeur: **SAINT-GOBAIN VITRAGE INTERNATIONAL**
**18, avenue d'Alsace**
**F-92400 Courbevoie(FR)**

(72) Inventeur: **Boutier, Philippe**
**29, Drève du Mérault**
**B-1410 Waterloo(BE)**
Inventeur: **Plebani, Dany-Ange**
**Rue de la montagne**
**F-60150 Thourotte(FR)**
Inventeur: **Machura, Christophe**
**245, rue de la Censé, Chevincourt**
**F-60150 Thourotte(FR)**
Inventeur: **Petitcollin, JeanMarc**
**12, rue de Verdun, Le Plessis Brion**
**F-60150 Thourotte(FR)**
Inventeur: **Mathivat, Denis**
**7, avenue du gros Buisson**
**F-60150 Thourotte(FR)**

(74) Mandataire: **Menes, Catherine et al**
**SAINT-GOBAIN RECHERCHE 39, Ouai Lucien Lefranc**
**F-93300 Aubervilliers(FR)**

(54) **Procédé et dispositif pour le bombage d'une feuille de verre.**

(57) L'invention concerne une ligne de production de vitrages bombés dans laquelle les feuilles de verre sont réchauffées, amenées en position horizontale dans une station de bombage où elles sont prises en charge par des outils de bombage, puis enfin, transportées dans une station de trempe, les étages de trempe et d'entrée du verre dans la station de bombage étant à des hauteurs différentes.

FIG.1

L'invention se rapporte aux techniques de production de vitrages bombés destinés notamment aux véhicules automobiles, techniques selon lesquelles chaque feuille de verre est, dans un premier temps, réchauffée au-delà de sa température de déformation, conduite dans une station de bombage située dans le prolongement du four et où est maintenue la température élevée du verre puis, après bombage, est transférée dans une station de refroidissement par exemple une station de trempe thermique.

Pour l'obtention de vitrages automobiles notamment de custodes, de vitres latérales, de lunettes arrières ou encore de pare-brise, il est nécessaire de mettre en forme une feuille de verre plane, découpée aux dimensions du vitrage puis de procéder au feuilletage ou plus fréquemment à la trempe du vitrage bombé afin de conférer une plus grande sécurité aux passagers en cas de bris du vitrage.

Il est connu de nombreux procédés de bombage dits horizontaux dans lesquels la feuille de verre est échauffée au-delà de son point de ramollissement (500-700°C) dans un four électrique qu'elle traverse convoyée par exemple par un lit de rouleaux moteurs. Le four de réchauffage se prolonge par une station de bombage où le verre est formé par des outils de bombage spécifiques et par exemple dans laquelle la feuille de verre est soulevée au-dessus du convoyeur, appliquée contre une forme de bombage puis enfin recueillie par un chariot portant un anneau profilé d'une manière correspondant à la forme définitive du vitrage bombé. Ensuite, le chariot évacue la feuille de verre par exemple vers un dispositif de trempe ou un autre dispositif de refroidissement.

Dans d'autres cas, presque exclusivement réservés à la production de vitrages feuilletés, la ou la paire de feuilles de verre est déposée à l'entrée du four sur une forme de bombage sur laquelle elle est directement échauffée pour un bombage dit par effondrement.

Sans détailler plus avant la technique de formage utilisée, il faut noter que plus la précision requise est grande, et plus la forme est complexe, plus le formage est lent. Opérer trop rapidement c'est éventuellement créer momentanément des contraintes supérieures à la résistance du verre et donc risquer sa casse. Par ailleurs lorsque l'étape de refroidissement consiste en une trempe thermique par exemple par soufflage d'air froid, il est essentiel que le vitrage entre le plus chaud possible dans la station de trempe.

Pour ces raisons notamment, la demanderesse a choisi ici de ne s'intéresser qu'aux procédés de formage selon lesquels la température du verre reste pratiquement constante pendant toute l'opération de bombage. Température constante ne signifie pas absence totale d'échanges thermiques avec la feuille de verre, les vitesses de défilement des feuilles de verre ne permettent d'ailleurs pas de garantir systématiquement un parfait équilibre thermique (et d'ailleurs celui-ci peut ne pas être souhaité, une surchauffe locale favorisant en ces points le pliage par exemple). Par contre, ces échanges thermiques restent d'une amplitude extrêmement faible dans la mesure où on choisit d'opérer le formage dans une enceinte chaude dont la température est voisine de celle du verre - et non à l'air libre où le verre initialement à environ 650°C subirait un refroidissement très important préjudiciable à une bonne qualité du formage et surtout de la trempe.

Des considérations ci-dessus, il est clair qu'il faut absolument éviter les variations brutales et incontrôlées de températures dans la station de bombage. Or s'il est relativement facile d'isoler thermiquement une enceinte fermée, il en est tout autrement d'une station de bombage qui comporte obligatoirement deux entrées-sorties (pour l'introduction et le retrait des feuilles de verre et/ou des cadres montés sur chariot transportant le verre bombé) et des fuites latérales par le convoyeur d'amenée des feuilles de verre depuis le four le plus souvent constitué par des rouleaux dont les pignons engrènent sur des chaînes disposées hors de l'enceinte chaude afin de simplifier les réglages et surtout d'obtenir des durées de vie raisonnables pour les moteurs d'entraînement de ces rouleaux dont on sait qu'il est pratiquement impossible de les faire fonctionner en continu et de façon satisfaisante à une température voisine de 650°C.

Côté entrée, c'est-à-dire côté four, il n'y a pas de possibilité de pénétration d'air froid étant donné que la station de bombage est à la même température que le four dont à la limite elle constitue l'élément de l'extrémité avale. Les fuites latérales peuvent par ailleurs être éliminées dans une large part grâce à un calfeutrage convenable. D'autre part, et dans la mesure où la ligne de production est implantée dans un bâtiment non sujet à des courants d'air, l'apport d'air froid qui s'en suit est pratiquement constant et peut donc être compensé par un chauffage approprié. Par contre, il en est tout autrement pour ce qui concerne la sortie de la station de bombage.

En effet, l'ouverture doit être suffisamment large pour laisser passer une feuille de verre bombée, soit dans certains cas une hauteur de plus de 20 centimètres, pour une largeur d'environ 1 m 50 si on prend l'exemple d'une lunette arrière. Sauf à accepter une consommation d'énergie exorbitante, il est totalement exclu de laisser de façon permanente une ouverture d'une telle dimension. Et même à supposer que le coût énergétique ne soit pas un problème, on ne réglerait pas pour autant le problème particulier de l'entrée d'air froid consécutive au soufflage d'air froid pour la trempe de sorte qu'il est pratiquement impossible de créer des conditions relativement isothermes.

De fait, toutes les stations "chaudes" de bombage sont équipées d'une porte de sortie avec des moyens d'ouverture et de fermeture rapide. Toutefois, chaque fois que cette porte est ouverte, on a une entrée très importante d'air froid. Dans une installation à cadence élevée, le moment où la porte s'ouvre pour la sortie d'une feuille de verre dont le formage vient d'être achevé peut correspondre à la trempe de la feuille de verre précédente et à l'arrivée dans la station de bombage de la feuille de verre suivante. Le courant d'air froid vient donc lécher les rouleaux et surtout refroidit la feuille de verre suivant ce qui lui est évidemment très dommageable.

Pour y remédier, il est connu de doubler la porte de la station de bombage par un rideau d'air chaud généré par des brûleurs placés dans la station de bombage. Un rideau d'air chaud descendant a l'inconvénient de rabattre l'air froid pénétrant dans la station vers le convoyeur et donc les feuilles de verre suivantes, tandis qu'un rideau d'air chaud ascendant doit être émis à une pression assez basse pour laquelle il ne peut se produire de soulèvement de la feuille de verre qui traverse le rideau d'air chaud. Cette limitation systématique de la pression permise ne permet pas une compensation complète du courant d'air froid de sorte qu'il est nécessaire de prévoir une bonne synchronisation des mouvements des différentes feuilles de verre afin que l'arrivée de la feuille de verre soit suffisamment tardive pour qu'une homogénéisation de la température de la station de bombage se produise entre deux feuilles de verre.

L'invention a pour premier but un procédé de formage de feuilles de verre minimisant l'influence de la pénétration d'air froid dans la station de bombage et autorisant de la sorte des cadences plus élevées de production.

Le procédé selon l'invention conforme à la revendication 1 est tel que la feuille de verre pénètre dans la station de bombage selon une direction sensiblement horizontale à un étage dit inférieur et sort de cette station de bombage toujours selon une direction sensiblement horizontale mais à un étage dit supérieur, distinct de l'étage inférieur. Au sens de l'invention, le terme étage est utilisé pour indiquer que la station de bombage est vue comme une succession d'au moins deux chambres superposées - mais sans parois délimitant le plancher et le plafond, certains éléments se situant uniquement à un étage donné (par exemple le convoyeur acheminant les feuilles de verre depuis la sortie du four ou le cadre servant à évacuer les feuilles de verre après le formage) d'autres comme les feuilles de verre passant d'un étage à l'autre.

Dans une telle configuration, l'air froid pénètre très au-dessus du niveau d'entrée des feuilles de verre, à un niveau proche de la voûte de la station de bombage. Comme cette dernière est munie de résistances chauffantes destinées au maintien de la température adéquate, l'air froid est alors immédiatement réchauffé et ne perturbe pas de façon importante une feuille de verre convoyée au niveau inférieur.

Cet effet est encore renforcé si conformément à une variante préférée de l'invention la porte d'entrée est doublée d'un rideau d'air chaud obtenu au moyen de résistances chauffantes placées entre le niveau inférieur et le niveau supérieur. Ce rideau d'air chaud contribue bien sûr au réchauffage de l'air froid mais surtout dévie la trajectoire de cet air froid en le rabattant vers la voûte de la station de bombage et les résistances qui s'y trouvent de sorte que non seulement l'air froid est attiédi mais que de plus il est dilué dans la masse d'air chaud de la station de bombage.

L'invention a également pour but un nouveau procédé de formage de feuilles de verre, susceptible éventuellement d'opérer selon le procédé à deux étages décrit précédemment. En effet différents moyens ont été proposés pour l'application de la feuille de verre contre la forme de bombage. Dans une première série de procédés, exemplifiée notamment par la demande de brevet WO 85/05100, la feuille de verre est soulevée et pressée par une forme inférieure constituée d'un anneau périphérique soulevé au travers du convoyeur.

Dans une seconde série de procédés à laquelle appartient plus spécialement l'invention, l'application a lieu à l'aide de forces de nature pneumatique. Ainsi, suivant l'enseignement du brevet FR 2 085 464, la feuille de verre est aspirée par une dépression créée à sa périphérie. Il est également connu par exemple du brevet EP 3 391 d'utiliser une forme d'aspiration supérieure constituée par une surface plane ou très légèrement cintrée, percée de multiples trous répartis sur toute sa surface qui communiquent avec une chambre de dépression de telle sorte que la feuille de verre soit aspirée. Enfin, il est aussi connu du brevet européen EP 169 770 d'utiliser un courant de gaz chaud de large section dirigé verticalement de bas en haut, qui exerce sur la face inférieure de la feuille de verre une force suffisante pour la soulever et l'appliquer contre la forme de bombage dont elle épouse ainsi la courbure.

Dans les cas des procédés de bombage dans lesquels la feuille de verre est aspirée par une dépression périphérique, la forme de bombage est placée dans un caisson sans fond - encore appelé jupe - connecté à des moyens d'aspiration et dont le contour est légèrement plus grand que celui de la feuille de verre découpée non bombée. Le galbe de la forme de bombage correspond au galbe que l'on désire conférer à la feuille de verre qui est par contre de dimensions très légèrement supérieure à celles de la forme de bombage.

En raison de la présence de ce caisson débordant, le centrage du volume de verre sous la forme de bombage doit être extrêmement précis, le verre ne devant pas buter et être de ce fait marqué par les parois du caisson ce qui aurait pour conséquence une qualité optique moindre, inacceptable pour un vitrage automobile.

Une autre limite de ce procédé tient dans les formes de vitrage ainsi susceptibles d'être obtenus et l'exclusion en pratique des vitrages à bombage complexe, c'est-à-dire présentant dans certaines régions, le plus souvent localisées près des bords du vitrage, des petits rayons de courbure. Notons que ce type de vitrage se retrouve fréquemment en raison des nécessités d'intégration dans la partie vitrée des véhicules automobiles d'éléments destinés par exemple à améliorer la pénétration dans l'air du véhicule : citons à titre d'exemple une lunette arrière comportant un repli jouant le rôle d'un becquet ou un déflecteur non mobile fixé à l'encadrement des vitres latérales des portes avant du véhicule. Cette limitation vient de ce que la projection sur un plan horizontal d'un tel vitrage bombé est de dimension nettement inférieure à celle de la feuille plane à l'origine de ce vitrage. En conséquence, la fuite latérale, c'est-à-dire la distance entre les bords de la feuille de verre et les parois latérales du caisson croît au fur et à mesure que progresse le formage du verre, sauf à choisir un prof il de caisson correspondant exactement à la trajectoire du bord de la feuille de verre, solution onéreuse et peu pratique car alors un nouveau caisson est nécessaire à chaque changement de fabrication et de plus, afin de déterminer avec exactitude cette trajectoire du bord de la feuille de verre, de nombreux essais peuvent s'avérer nécessaires.

Ainsi, si on opère avec un caisson standardisé, on se retrouve dans une situation paradoxale où la force pneumatique qui agit au niveau d'une partie de la feuille de verre est d'autant plus faible que la courbure que l'on désire conférer à cette partie est plus importante.

Il est connu d'opérer dans ces conditions, après un bombage mettant en cause des forces pneumatiques un formage complémentaire par pressage à l'aide d'un contremoule annulaire que l'on vient placer sous la forme de bombage supérieure retenant la feuille de verre, le contre-moule pouvant servir ultérieurement de support à la feuille de verre pendant sa trempe. La mise au point de ce bombage complémentaire, notamment l'optimisation de la durée de pressage, est rendue délicate par le manque de visibilité dû à la présence du caisson. En pratique, on aura tendance à prolonger le pressage alors que la feuille de verre adopte déjà pratiquement la courbure souhaitée à l'aide de la forme de bombage et qu'un pressage instantané suffirait pour parfaire le galbe. De ce fait, le cycle de bombage est allongé. De plus, le caisson sans fond ou jupe peut géner lors de l'introduction des éléments de pressage.

L'invention a donc pour second objet un procédé amélioré de bombage de feuille de verre permettant d'une manière simplifiée l'obtention de feuilles de verre avec un bombage complexe, notamment sur les bords. Un autre objet de l'invention est un dispositif idoine à la mise en oeuvre du procédé selon l'invention et permettant une observation de la trajectoire de la feuille de verre pendant son formage.

Conformément à la revendication 11, il est proposé un procédé selon l'invention du type décrit dans le brevet FR 2 085 464, qui est donc tel que la feuille de verre est préchauffée au-delà du point de ramollissement du verre et convoyée en position horizontale jusqu'à la cellule de formage et est là soulevée au-dessus du convoyeur jusqu'à venir au contact d'une forme de bombage montée dans un caisson d'aspiration. Ce procédé se caractérise par l'utilisation d'un caisson d'aspiration formé de deux éléments mobiles l'un par rapport à l'autre, un élément inférieur et un élément supérieur portant la forme supérieure, de telle sorte qu'un chariot de réception du verre puisse venir s'intercaler entre la partie inférieure du caisson et la partie supérieure du caisson lorsque celle-ci est remontée en position haute.

De préférence, on applique une grande force pneumatique pendant la phase de transfert de la feuille de verre depuis le lit de rouleaux jusqu'à la forme supérieure de bombage - ce qui correspond à la période où la chambre de dépression est délimitée par la partie inférieure du caisson d'aspiration - ceci afin de canaliser la dépression de façon optimale pour favoriser la montée. Puis pendant que la feuille de verre est appliquée contre la forme supérieure de bombage, on réduit quelque peu la force pneumatique appliquée afin d'éviter que les parties du vitrage rencontrant en premier lieu et de ce fait le plus longtemps la forme de bombage - c'est-à-dire généralement la partie centrale du vitrage - ne soit pas marquée par la forme, ce qui entraînerait les défauts optiques.

La prise en charge de la feuille de verre est obtenue par une aspiration créée à sa périphérie, la zone sous dépression étant délimitée par les parois de la partie inférieure du caisson. Ces parois sont de préférence droites et constituent ainsi un conduit vertical dont la hauteur est de préférence voisine de la hauteur du trajet libre de la feuille de verre, c'est-à-dire du trajet que doit parcourir la feuille de verre avant de venir buter contre la forme supérieure de bombage.

La partie supérieure du caisson est de préférence en forme, c'est-à-dire que les parois ont un profil qui correspond approximativement à la trajectoire du bord de la feuille de verre de façon à maintenir une distance constante entre le verre et le bord du caisson.

Avantageusement, on utilise un caisson d'aspiration dont la partie supérieure déborde peu par rapport à la forme de bombage, à la limite on place simplement des déflecteurs à la périphérie de la forme de bombage aux endroits nécessaires, strictement fonction des impératifs de bombage, sans tenir compte des questions d'amenée de la feuille de verre jusqu'à la forme supérieure de bombage. De plus le niveau le plus bas défini par ces déflecteurs ou les parois de la partie supérieure du caisson est de préférence plus élevé que le niveau le plus bas de la forme de bombage, autrement dit celle-ci descend légèrement plus bas que cette partie du caisson. Ainsi, la fuite latérale est de petite dimension à la fin du processus de bombage ce qui octroie une meilleure maîtrise du formage dans les zones les plus bombées généralement sur les bords du vitrage.

Lorsque la partie supérieure du caisson et la forme de bombage qui en est solidaire sont remontées, conformément à l'invention, il reste une zone libre entre la partie inférieure du caisson - que nous appelerons par la suite "conduit vertical" - et la partie supérieure du caisson - que nous appelerons encore "jupe". La hauteur de cette zone libre est choisie de façon à permettre l'introduction d'un chariot portant un squelette annulaire dont le pourtour correspond essentiellement au galbe que l'on désire conférer au verre. Comme la jupe est de préférence très courte, elle ne gêne pas l'entrée du squelette même pour les formes très galbées. De plus, elle laisse une vision parfaite de la feuille de verre au moment où celle-ci épouse les contours de la forme de bombage. L'intérêt d'une observation est bien sûr très grand en cours de développement industriel par exemple d'un nouvel outillage - par outillage on tend la forme supérieure et son caisson ainsi que le ou éventuellement les squelettes de trempe et/ou de pressage - notamment afin de définir les temps nécessaires aux éventuels pressages complémentaires. L'observation est également très utile en production, car elle permet de guider le travail du personnel chargé de procéder aux réglages à chaque changement de type de volume, changement qui se produit plusieurs fois par jour.

Pour la mise en oeuvre du procédé selon l'invention, il convient d'utiliser un caisson d'aspiration constitué de deux éléments distincts. Dans un premier exemple de réalisation, la partie inférieure du caisson ou conduit vertical peut être fixe et la partie supérieure du caisson ou jupe mobile.

L'emploi d'un conduit vertical fixe donne une base de référence particulièrement sûre permettant de déterminer avec une très grande précision la position exacte de la feuille de verre et de la recentrer si nécessaire. De plus, comme la jupe vient en position basse buter contre le conduit vertical, on a également un positionnement très précis en hauteur de la forme supérieure de bombage, ce qui est bien sûr un gage de qualité du formage.

Comme indiqué précédemment, l'invention convient particulièrement bien à la production de vitrages très galbés pour lesquels le squelette de trempe et de pressage ne pourrait autrement pénétrer dans le caisson d'aspiration. Il va donc de soi que le procédé de formage sera le plus souvent complété par une étape de pressage encore que celle-ci ne modifie en rien le principe de l'invention.

Le procédé de formage selon la revendication 11 que nous venons maintenant de décrire peut être adapté à une installation comportant une entrée et une sortie à des niveaux différents. Mais plus généralement, le principe d'entrée et de sortie à des niveaux différents peut être adapté à tous les procédés de formage en position horizontale selon lesquels la feuille de verre est acheminée sur un convoyeur jusqu'à venir se positionner précisément sous une forme de bombage et est alors soulevée par des forces de nature pneumatique ou mécanique jusqu'à venir en butée contre la forme de bombage dont elle épouse la courbure si nécessaire au moyen d'un pressage supplémentaire. Dans ces procédés - dont on trouvera des exemples détaillés dans les publications de brevet précitées WO 85/05100, FR 2 085 464, EP 3391 ou EP 169 770 - pour la prise en charge d'une feuille, la forme de bombage est très proche du convoyeur d'amenée des feuilles de verre et donc à ce moment là se trouve à l'étage inférieur. Une fois la feuille de verre appliquée contre la forme de bombage, il est connu selon l'art de relever légèrement la forme de bombage afin d'introduire un chariot portant un cadre servant à l'évacuation des feuilles de verre. Mais ce cadre évolue lui aussi à l'étage inférieur, à un niveau sensiblement identique à celui du convoyeur d'amenée. Par contre, en accord avec l'invention, on relève la forme de bombage d'une hauteur bien supérieure à la hauteur qui serait nécessaire seulement en vue de permettre l'introduction dudit chariot et c'est donc dans cette position haute, à l'étage supérieur, que s'effectue l'évacuation. Il faut noter que la distance que parcourt la feuille de verre à partir du moment où elle est appliquée sur la forme de bombage est pratiquement indifférente du point de vue de la qualité du formage ce qui n'est évidemment pas le cas de la distance parcourue seule par la feuille de verre pour venir à la rencontre de la forme de bombage.

Un autre avantage indirect de l'invention est qu'elle autorise la disposition dans le même alignement du four, de la station de bombage et de la station de refroidissement notamment de trempe. En effet et sauf à prévoir un escamotage des caissons de trempe, il n'est pas possible d'évacuer une feuille de verre directement hors de la station de bombage (c'est-à-dire sans lui faire subir tout le cycle de formage) en passant par la sortie prévue pour les vitrages correctement formés, ceci du fait que les vitrages de formes complexes doivent être trempés dans des caissons de soufflage de trempe en forme dans lesquels ne peut pénétrer une feuille de verre plan. Lorsque le convoyeur d'amenée est à un étage différent de l'étage de sortie, on peut par contre le prolonger par un dispositif d'évacuation et de casse des volumes à évacuer directement. Cette évacuation se fait par exemple par un procédé selon lequel les feuilles de verre sont échauffées dans un four, acheminées en position horizontale dans une station de bombage où elles doivent être prises en charge par des outils de bombage puis transportées dans une station de refroidissement notamment de trempe, les volumes défectueux étant évacués à l'extrémité de la station de bombage, et dans ce but sont fissurés par pulvérisation d'un fluide froid puis broyés.

La pulvérisation du fluide froid - par exemple de l'eau - a lieu de préférence alors que les feuilles de verre sont en mouvement sur un convoyeur d'évacuation, immédiatement avant d'être broyées. De cette façon, même les volumes de grandes dimensions peuvent être réduits en fins morceaux sur une longueur très courte qui n'excède pas par exemple 300 mm. Ce très faible encombrement permet de loger facilement le système d'évacuation selon l'invention entre une station de trempe et une station de bombage disposées dans l'alignement du four de réchauffage des feuilles de verre.

Eventuellement, le système d'évacuation a son fonctionnement tout ou en partie déclenché par la détection de la présence d'un volume défectueux. La détection peut ainsi commander la pulvérisation du fluide froid et la mise en place du système de broyage qui est éclipsé entre deux interventions afin de ne pas gêner les mouvements des feuilles de verre correctement bombées, ou encore la mise en route des moyens de broyage.

Une telle détection n'est toutefois pas indispensable si le système d'évacuation selon l'invention est avantageusement appliqué à une ligne de production de feuilles de verre bombées-trempées pour laquelle le niveau des feuilles de verre dans la station de trempe est différent du niveau des feuilles de verre lors de leur acheminement dans le four. Dans ce cas, on fait de préférence fonctionner de façon permanente le système d'évacuation des feuilles de verre - qui trouve par définition sa place au niveau du convoyeur du four qui forme généralement le niveau inférieur - son fonctionnement ne pouvant perturber le traitement des feuilles de verre correctement bombées qui sont déplacées à un niveau supérieur.

Le dispositif d'évacuation des volumes défectueux équipant l'installation de bombage en position horizontale comportant un four de réchauffage des feuilles de verre muni d'un convoyeur, une station de bombage et une station de refroidissement notamment de trempe, est situé dans l'axe du four, à l'extrémité de la station de bombage et alimenté par un convoyeur prolongeant le convoyeur du four est essentiellement constitué d'au moins une rampe de pulvérisation d'un fluide froid et de moyens de broyage du verre. Comme moyens de broyage, on peut avantageusement utiliser un concasseur ou un outil de martelage tel une herse déplacée verticalement et alternativement. Le concasseur est par exemple formé d'un rouleau mû en rotation et pourvu de dents. Si nécessaire - notamment si le dispositif équipe une ligne de production dont les niveaux d'acheminement du verre et de trempe des feuilles bombées ne sont pas suffisamment espacés - les moyens de broyage tels le rouleau concasseur sont montés sur un équipage mobile par exemple verticalement permettant de les éclipser entre deux volumes défectueux et de laisser le passage libre par exemple pour le cadre de trempe. Dans ce cas, le système d'évacuation est nécessairement pourvu d'un dispositif de détection de la présence d'un volume défectueux non pris en charge par les outils de bombage. Ce dispositif de détection - qui peut être notamment du type décrit dans le brevet EP-A-217 708 - sert alors à commander le début de la pulvérisation du fluide froid et la remontée de l'équipage mobile.

Ce dispositif d'évacuation est avantageusement protégé par un carter pour éviter toute entrée d'air froid ou est éventuellement fermé par un rideau, par exemple en amiante que les volumes défectueux soulèvent pour pénétrer dans le dispositif d'évacuation (un tel rideau n'est pas possible pour la sorte des feuilles de verre correctement formées, n'est pas possible en raison des risques de marquage qui sont ici totalement indifférents s'agissant de transformer la feuille de verre en calcin). D'autres détails et caractéristiques avantageuses de l'invention sont décrits ci-après en référence aux dessins annexés qui représentent :

- **figure 1** : un schéma d'implantation d'une installation de bombage-trempe en ligne équipée d'un système d'évacuation des volumes défectueux selon l'invention,

- **figure 2** : un agrandissement du système d'évacuation des volumes défectueux selon l'invention,
- **figures 3 à 8** : les positions relatives des éléments principaux nécessaires pour la mise en oeuvre de procédé selon la revendication , au cours des étapes successives du traitement d'une feuille de verre,
- **figure 9** : une vue schématique de dessous d'un conduit vertical, visible aux figures 3 à 8,
- **figure 10** : une vue schématique de dessous de la jupe mobile, visible aux figures 3 à 8,
- **figure 11** : une vue de côté du conduit vertical selon la figure figure 9 et de la jupe mobile selon la figure 10 en position basse.

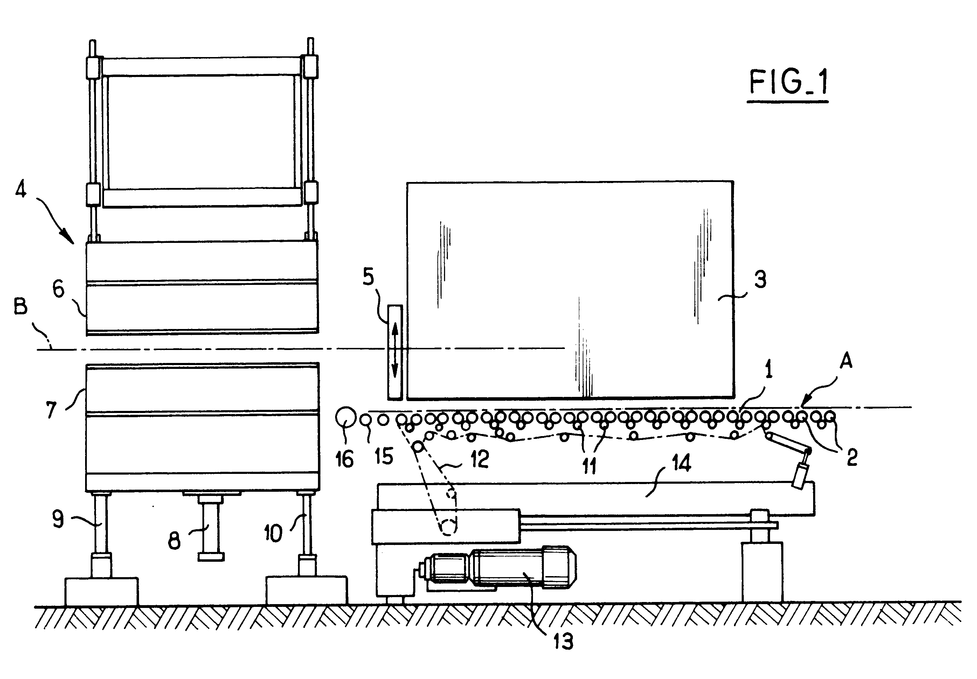

L'installation de bombage-trempe schématisée à la figure 1 comporte un four pour le réchauffement une à une des feuilles de verre et ici non représenté. Les feuilles de verre sont acheminées au travers du four par un convoyeur 1 par exemple à rouleaux 2 dont le niveau de référence est montré par la ligne discontinue A. A la suite du four, les feuilles de verre échauffées à leur température de trempe et de bombage pénètrent dans la station de bombage 3. Cette station de bombage 3 comporte par exemple un ensemble porte outillage muni d'un système de relevage. Cet outillage est par exemple constitué par une forme de bombage supérieure entourée d'un caisson de dépression connecté à un dispositif approprié d'aspiration, ladite forme de bombage étant relevée et abaissée au cours d'un cycle de bombage par exemple au moyen de chaînes fixées sur l'ensemble porte outillage. Des exemples d'outils de bombage et de procédés de bombage utilisant de tels procédés sont par exemple décrits dans les demandes de brevets EP 240 418 et EP 241 355.

Un cadre par exemple de trempe recueille les feuilles de verre après leur bombage. Le cadre se déplace selon un niveau B bien supérieur au niveau A qui est le niveau de de pénétration des feuilles de verre dans la station de bombage 3. On voit donc que cette installation comporte deux étages distincts. Une fois déposée sur le cadre de trempe la feuille de verre est conduite à la station de trempe 4 après ouverture de la porte 5.

Cette station de trempe 4 est constituée de deux caissons de soufflage 6 et 7, montés sur un vérin 8 et guider par des coulisses 9,10 de façon à écarter les caissons pour tout entretien. Des conduites ici non représentées sont prévues pour l'alimentation en gaz de soufflage. Le niveau moyen de verre dans la station de trempe 4 est le niveau B ; l'expression "niveau moyen" rappelle que la feuille de verre est alors bombée selon une forme plus ou moins complexe et qu'en fait les deux caissons de soufflage ont une forme conforme à la surface de la feuille de verre bombée.

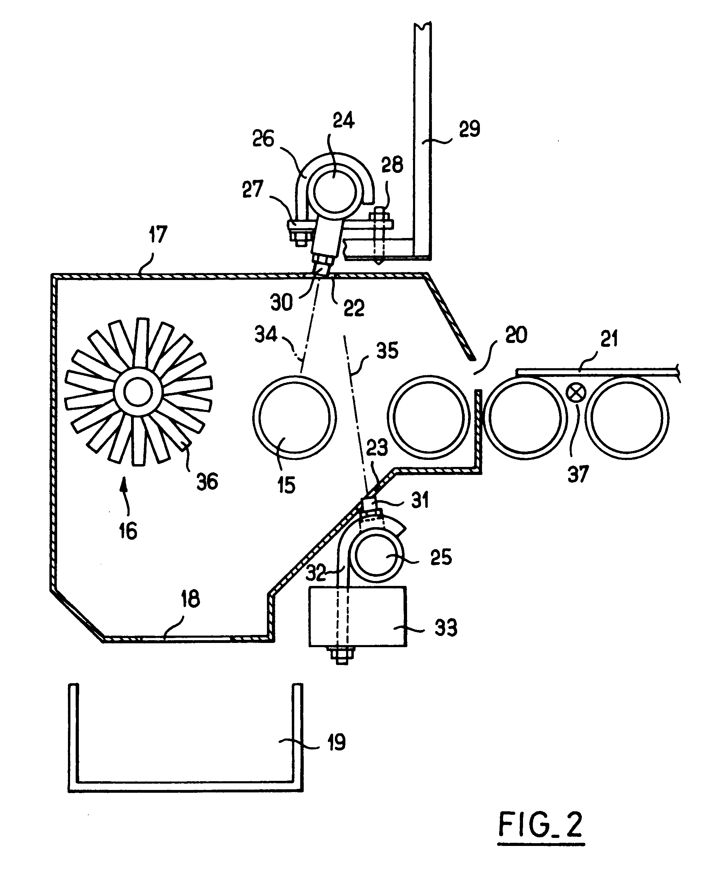

Si on revient maintenant à la station de bombage 3, on note qu'elle comporte sous l'ensemble porte outillage un convoyeur 1, prolongement du convoyeur d'acheminement au travers du four. Ce convoyeur est constitué par des rouleaux 2 posés sur des galets 11 et entraînés par des chaînes 12 entraînées par le moteur 13, l'ensemble étant soutenu par une poutre 14. Tous ces éléments bien connus de l'homme de l'art n'ont été schématisés ici que de manière à donner une idée de l'encombrement des différents organes et de la difficulté qu'il en résulte pour l'implantation d'un dispositif d'évacuation des volumes défectueux. Pour éviter un certain refroidissement du verre qui diminuerait l'efficacité du soufflage de trempe, la station de trempe doit être placée aussi proche que possible de la station de bombage. De ce fait, l'espace disponible à l'extrémité aval 15 du convoyeur 1 est particulièrement réduit et ne permet notamment pas d'y faire tomber tels quels les volumes défectueux. C'est pourquoi, on dote l'installation d'un système d'évacuation que l'on a simplement schématisé ici par le rouleau concasseur 16 et qui est représenté de façon plus détaillée à la figure 2.

Sur cette figure 2, on retrouve l'extrémité avale du convoyeur 1 avec ces 4 derniers rouleaux dont le rouleau extrême 15, ici des rouleaux creux en silice. Le système d'évacuation est entouré d'un carter 17 dont le fond est pourvu d'une trappe 18 pour l'évacuation vers une fosse à calcin 19. Ce carter 17 comporte simplement une ouverture 20 pour l'entrée d'un volume défectueux 21 acheminé par le convoyeur 1 et deux jours 22, 23. Face à ces jours 22, 23 sont montées des rampes de pulvérisation 24 et 25 s'étendant sur toute la largeur du convoyeur 1. La rampe supérieure 24 est fixée par une patte de fixation 26 à une plaque support 27 montée grâce aux boulons 28 sur un appendice de la paroi latérale 29 de la station de bombage. La rampe 24 est munie de buses 30 pour la pulvérisation d'un fluide froid par exemple de l'eau. De façon similaire, la rampe inférieure 25, munie de buses de pulvérisation 31 est fixée par une patte de fixation 32 à un support 33. Ces deux rampes sont équipées de canalisations d'alimentation en eau ici non représentées. Elles émettent de façon permanente des jets d'eau pulvérisée 34, 35. Deux rampes sont ici utilisées mais on peut éventuellement faire fonctionner le système d'évacuation avec une seule rampe.

Lorsque le volume défectueux à sa température de bombage passe entre les jets 34, 35, il est entièrement fissuré du fait du choc thermique extrêmement intense. Toutefois, les morceaux de verre restent positionnés les uns à côté des autres à la façon des éléments d'un puzzle reconstitué. C'est pourquoi le dispositif d'évacuation doit être complété par un dispositif de broyage ici constitué d'un rouleau concasseur 16 muni de dents 36 et mû en rotation par un dispositif ici non représenté. Au contact des dents 36, le verre fissuré éclate en multiples fragments qui retombent dans la fosse 19 en passant par la trappe 18.

Dans une variante préférée, on ne prévoit pas de fosse à calcin sous le dispositif d'évacuation mais le calcin est évacué directement (et avec l'eau pulvérisée) par un tapis vibreur incliné . Ce tapis vibreur incliné - ou tout autre dispositif équivalent - supprime toute nécessité d'arrêt pour vidange.

Le carter 17 occupe une longueur de ligne très faible, de préférence inférieure à 300 mm, de sorte que cet ensemble peut sans difficulté être logé dans l'espace disponible entre les stations de bombage et de trempe. Par ailleurs comme l'ensemble d'évacuation est protégé par un carter, la pulvérisation d'eau peut se faire de façon permanente dans une installation à deux niveaux telle que représentée à la figure 1, sans risquer de perturber le traitement des volumes "normaux".

Si on ne souhaite pas faire fonctionner de façon permanente le dispositif d'évacuation, par exemple la période de réglage passée, on équipe la ligne d'un détecteur 37 indiquant le cas échéant la présence d'un volume défectueux à proximité de l'extrémité avale 15. Après une éventuelle temporisation, le détecteur 37 sert alors à commander une ou plusieurs des opérations telles la pulvérisation, la rotation du rouleau concasseur, la mise en marche du tapis vibreur.

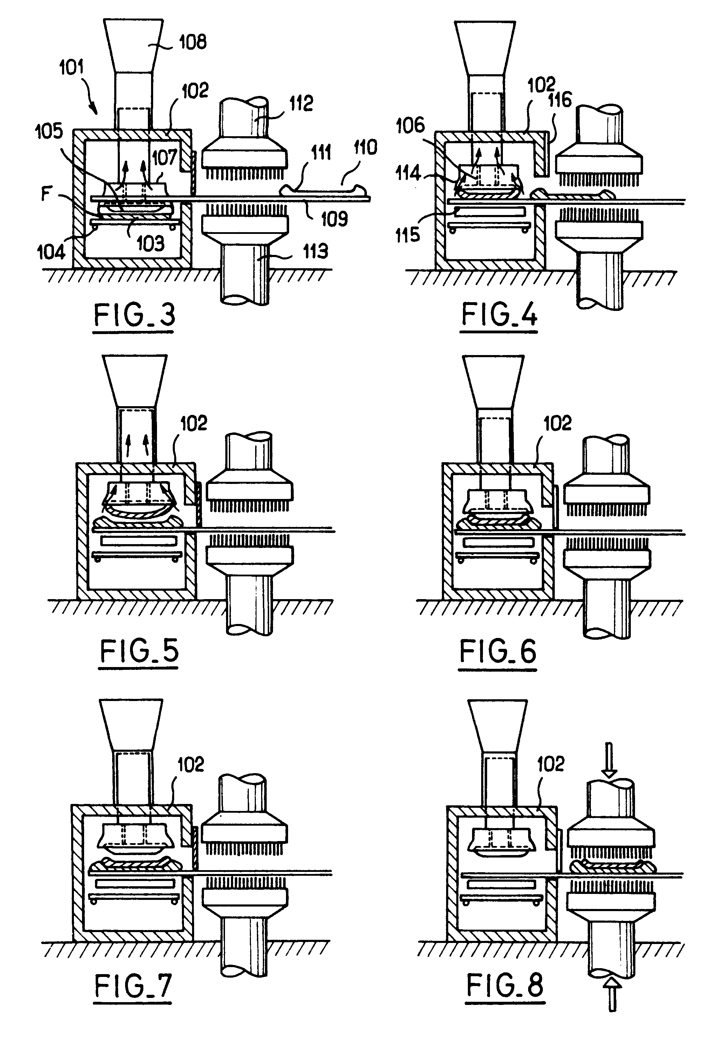

L'invention a également pour objet un procédé de bombage caractérisé par l'utilisation d'un caisson d'aspiration constitué par deux éléments mobiles l'un par rapport à l'autre, un élément supérieur en jupe portant la forme supérieure de bombage de sorte qu'un chariot de réception du verre puisse venir s'intercaler entre les deux éléments lorsque la forme supérieure de bombage est en position haute. Nous allons maintenant décrire les différentes étapes du procédé selon l'invention sont schématisées aux figures 3 à 9. Dans un four non représenté et dont l'axe serait perpendiculaire au plan de la feuille de dessin, les feuilles de verre sont échauffées une à une en étant convoyée horizontalement sur un lit de rouleaux moteurs. A la suite du four est prévue une cellule de bombage 101 entourée de parois réfractaires 102 afin de maintenir dans cette cellule de bombage une température voisine de celle du verre chauffé à 500-700˚ C. La feuille de verre véhiculée sur des rouleaux 103 posés sur des paliers 104 vient s'immobiliser sous la forme de bombage supérieure 105 qui est montée par des tirants 106 sur le caisson d'aspiration 107. Le caisson d'aspiration 107 est connecté à une chambre sous dépression 108, de sorte qu'un courant d'air ascendant est créé au voisinage de la périphérie de forme supérieure 105.

Perpendiculairement à l'axe du four sont prévus des rails 109 sur lesquels roule un chariot 110 portant un squelette 111. Ces rails passent entre deux caissons 112, 113 de soufflage de trempe, et contrairement à l'art sont situés à un niveau nettement plus élevé que celui du convoyeur 113.

La feuille de verre F est immobilisée et correctement positionnée sous la forme supérieure de bombage, cette dernière est descendue en position basse (figure 3), à proximité de la surface de la feuille F. Lorsque l'on souhaite fabriquer un vitrage de forme particulièrement complexe, les dimensions de la feuille de verre plane sont nettement plus grandes que celles de la projection sur un plan de la feuille de verre après bombage. Aussi conformément à l'invention, le caisson d'aspiration 107 est constitué de deux éléments mobiles l'un par rapport à l'autre : un conduit vertical 115 par exemple fixe et une jupe 114 solidaire de la forme supérieure de bombage 105. Ce conduit vertical 115 est à section droite. Son contour approche le contour de la feuille de verre F à l'état plan, en débordant légèrement afin de permettre l'aspiration périphérique de la feuille de verre. Le contour de la jupe épouse lui la trajectoire de la feuille de verre en cours de conformation. Celle-ci s'amenuise donc et on a de préférence une paroi courbe. Comme la jupe 114 n'intervient qu'indirectement pendant la première phase de l'opération, c'est-à-dire la phase de l'envol pendant laquelle l'aspiration doit être au mieux canalisée, elle peut être très courte avec une forme supérieure de bombage 105 qui déborde largement par le bas.

Dès que le verre atteint la forme de bombage (figure 4), la forme d'aspiration est de préférence un peu diminuée afin d'éviter tout risque de détérioration du verre. A ce moment, la forme supérieure 105 - et donc la jupe 114 -sont remontées en position supérieure. Le chariot 110 est alors amené en direction de la cellule de bombage 101, après ouverture de la porte 116 qui sépare la cellule de bombage 101 de la cellule de trempe.

Pendant ce temps, la feuille de verre épouse progressivement les contours de la forme de bombage. Comme il est particulièrement visible à la figure 5, cette opération n'est pas masquée par les contours du caisson 107 du fait que la partie supérieure de celui-ci est simplement constituée par la jupe 114 qui très courte forme simplement des défecteurs autour de la forme supérieure 105 afin de canaliser les courants d'aspiration. La jupe 114 et la forme 105 associées sont remontées suffisamment pour insérer le chariot 110, même si le squelette 111 est de forme particulièrement complexe. La forme supérieure est alors redescendue (figure 6) afin de déposer la feuille de verre F' sur le squelette 111. La dépose peut être éventuellement complétée par un pressage. Pour faciliter ce dernier, il est d'ailleurs préférable de prévoir un positionnement de la forme de pressage commandé par des vérins par exemple hydrauliques, commandant les mouvements de la jupe 114, que ce soit dans le sens ascendant ou le sens descendant. Ces vérins permettent d'assurer une pression constante sans tenir compte du poids de la forme supérieure et de la jupe. La forme 105 est à nouveau relevée pour libérer le squelette (figure 7) qui conduit la feuille F entre les caissons de soufflage où on procède à l'opération de trempe (figure 8).

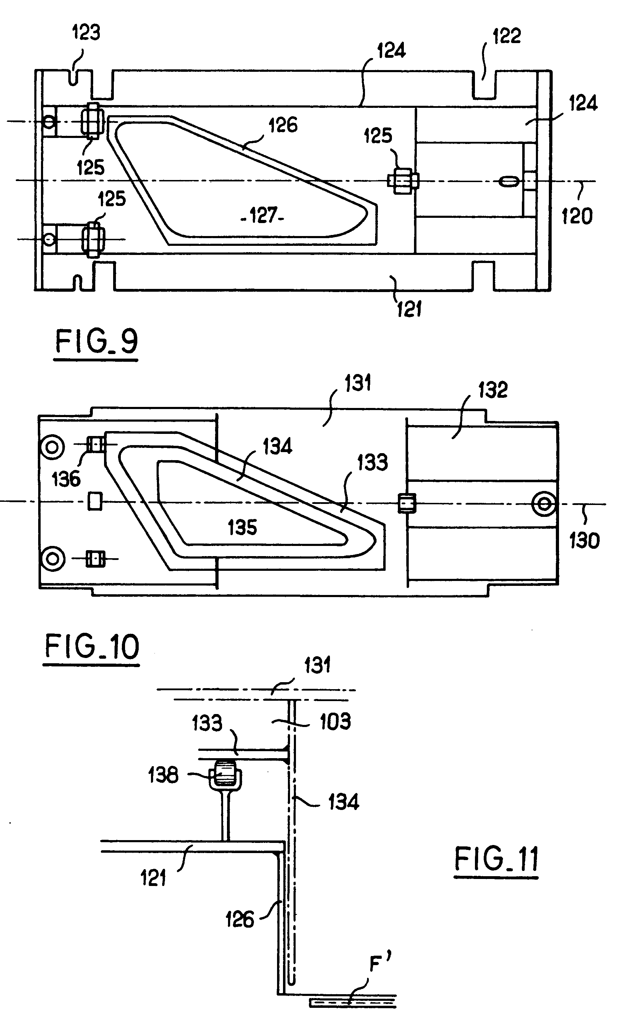

Pour la mise en oeuvre du procédé ci-dessus décrit, on peut avantageusement utiliser un caisson constitué des éléments représentés aux figures 9 et 10.

La figure 9 concerne la partie inférieure du caisson encore appelée conduit vertical. L'axe du four est schématisé par la ligne discontinue 120. Cette partie du caisson est essentiellement constituée par une plaque 121 découpée dans une tôle en comportant des encoches 122, 123 pour sa fixation sur des moyens de support appropriés par exemple du type tringle de sorte que la plaque puisse coulisser et être échangée en un laps de temps très court. Pour éviter toute déformation malgré la température de la cellule et les grandes dimensions des vitrages, cette plaque est munie de raidisseurs 124. Sur cette plaque 121, par des moyens de fixations appropriés 125, on fixe le conduit vertical 126 dont l'ouverture 127 correspond - avec une légère surcote - aux dimensions du vitrage à plat.

Cette partie du caisson peut être montée fixe ou déplaçable verticalement selon une petite course, d'une hauteur suffisante pour permettre le dégagement d'une feuille de verre improprement aspirée.

La partie supérieure du caisson ou jupe - toujours mobile - est schématisée à la figure 10. L'axe du four a été ici schématisé par la ligne discontinue 130. Sur une plaque 131 de préférence en tôle munie d'éléments de renfort 132 est fixée par des goussets 137 visibles à la figure 11, une plaque 133.

Ces deux plaques supportent la jupe 134. La fixation est obtenue par des moyens 136. L'ouverture 135 correspond à l'encombrement du vitrage après formage.

Comme schématisé à la figure 11 où sont représentés le conduit vertical 126 et la jupe 134 en position d'aspiration d'une feuille de verre F, la course de la jupe 134 est limitée par un coussinet en matière plastique 138 sur lequel vient buter la plaque 133 lorsque la jupe est en position basse.

Le caisson vertical 126 - à section droite constante - sert de préférence de supports à des moyens de centrage par exemple des poussoirs commandés par des vérins, poussoirs qui permettent de positionner la feuille F très exactement au centre du conduit vertical 126. Pendant ce positionnement, une faible dépression et/ou un léger soufflage vertical par un courant d'air chaud est créé dans le caisson. Ceci afin de soulager partiellement les rouleaux du convoyeur du poids de la feuille F qui ne risque pas ainsi d'être marquée. Notons que même lorsqu'il est mobile en hauteur, le conduit vertical est en position à proximité du plan des rouleaux du convoyeur pendant un temps beaucoup plus long que celui disponible pour la forme supérieure de bombage et qu'il est ainsi possible de procéder à un positionnement beaucoup plus précis.

**Revendications**

1. Procédé de bombage d'une feuille de verre, notamment en vue de l'obtention de vitrages automobiles dans lequel la feuille F de verre préchauffée au-delà du point de ramollissement du verre, convoyée en position horizontale jusqu'à une cellule de formage (101) dans laquelle elle est soulevée au-dessus du convoyeur (103) jusqu'à venir au contact d'une forme de bombage (105) montée dans un caisson d'aspiration (107), **caractérisé en ce que** l'on utilise un caisson d'aspiration (107) constitué par deux éléments mobiles (114, 115) l'un par rapport à l'autre, un élément supérieur ou jupe (114) portant la forme supérieure de bombage de sorte qu'un chariot de réception (110) du verre F puisse venir s'intercaler entre les deux éléments (114, 115) lorsque la forme supérieure de bombage (107) est en position haute.

2. Procédé selon la revendication 1, **caractérisé en ce qu'**on applique une force d'aspiration plus grande pendant le trajet libre du verre, c'est-à-dire lors du transfert de la feuille de verre F du convoyeur (103) à la forme supérieure de bombage (105).

3. Procédé selon l'une des revendications 1 à 2, **caractérisé en ce que** l'élément inférieur du caisson ou conduit vertical (115) est fixe.

4. Procédé selon l'une des revendications 1 à 3, **caractérisé en ce que** l'élément inférieur du caisson ou conduit vertical (115) est mobile.

5. Procédé selon l'une des revendications 3 à 4,

**caractérisé en ce que** le conduit vertical (115) sert d'élément de référence lors du centrage de la feuille de verre.

6. Procédé selon l'une des revendications 1 à 5, **caractérisé en ce que** le chariot de réception (110) supporte un squelette de pressage (111).

7. Dispositif pour la mise en oeuvre du procédé selon l'une des revendications 1 à 6, comportant un four de réchauffage du verre, un convoyeur (103), une cellule de bombage (100), une forme supérieure de bombage (10 et un caisson d'aspiration (107), **caractérisé en ce que** ledit caisson (107) est formé par un conduit vertical (115) et une jupe (114) mobile par rapport à ce conduit et solidaire de la forme de bombage (105).

8. Dispositif selon la revendication 7, **caractérisé en ce que** le conduit sert de support à des moyens de centrage de la feuille de verre F.

9. Dispositif selon la revendication 7 ou 8, **caractérisé en ce qu'**il comporte des moyens aptes à déplacer verticalement le conduit (115).

10. Dispositif selon l'une des revendications 7 à 9, **caractérisé en ce que** les mouvements ascendants et descendants de la jupe (114) sont commandés par des vérins.

11. Dispositif selon l'une des revendications 7 à 9, **caractérisé en ce que** les niveaux d'entrée du verre dans la station de bombage et de sortie hors de la station sont différents.

FIG_1

EP 0 469 640 A2

FIG_2

FIG_3

FIG_4

FIG_5

FIG_6

FIG_7

FIG_8

FIG. 9

FIG. 10

FIG. 11